# EUROPEAN PATENT APPLICATION

(11) **EP 4 682 869 A1**
(43) Date of publication of application: **21.01.2026**
(21) Application number: 24792818.7
(22) Date of filing: 26.02.2024
(51) Int. Cl.: G10L 15/26, G10L 15/183, G10L 21/0208, G10L 15/06, G10L 15/22, G10L 15/20

(54) **METHOD FOR CONTROLLING DEVICE ON BASIS OF COMMAND EXTRACTED FROM USER UTTERANCE AND COMPUTING APPARATUS FOR PERFORMING SAME**

(30) Priority: 18.04.2023 KR 20230050861; 08.01.2024 KR 20240003129
(71) Applicant: Samsung Electronics Co., Ltd., Suwon-si, Gyeonggi-do 16677 (KR)
(72) Inventor: KO, Hyeonmok, Suwon-si, Gyeonggi-do 16677 (KR); LEE, Kyenghun, Suwon-si, Gyeonggi-do 16677 (KR)
(74) Representative: Gulde & Partner
(86) International application number: PCT/KR2024/002449
(87) International publication number: WO 2024/219631

(57) **Abstract**

According to the present disclosure, a method includes obtaining an utterance of a user, determining whether a target text requesting a device to perform a function is included in the utterance by using a language model, and controlling the device based on the target text based on determining that the target text is included, wherein the language model may be a model trained to extract text related to a request from successive sentences.

## Description

### Technical Field

The present disclosure relates to a method of controlling a device based on a command extracted from a user's utterance. More particularly, the present disclosure relates to a method of sorting out a command to control a device and unnecessary text from a user's utterance and further controlling the device based on the command.

### Background Art

The development of multimedia and network technologies has allowed users to receive various services through their devices. In particular, as voice recognition technology has evolved, users are able to input voice (e.g., utterance) to their device and receive response messages from a service providing agent based on the voice input.

However, as a preparatory action to recognize voices, a device requires a signal (e.g., a wake-up word) before receiving the voice input or needs to receive only a command required to facilitate voice recognition. In other words, recognizing a command for the device is difficult in conversation uttered naturally in daily life.

In distinguishing whether a valid command is included in a voice input of a user, an artificial intelligence (AI) technology or a rule based natural language understanding (NLU) may be used.

### Disclosure of Invention

### Solution to Problem

According to an embodiment of the present disclosure, a method may include obtaining a user's utterance. The method may include determining whether a target text requesting a device to perform a function is included in the utterance by using a language model. The method may include controlling the device based on the target text when determining that the target text is included. The language model may be a model trained to extract text related to a request from successive sentences.

According to an embodiment of the disclosure, a computing apparatus may include an input/output interface, memory, and at least one processor. The input/output interface may receive a user input. The memory may store instructions for processing a language. The at least one processor may execute the instructions to obtain an utterance of a user. The at least one processor may determine whether a target text requesting a device to perform a function is included in the utterance by using a language model. The at least one processor may control the device based on the target text when determining that the target text is included. The language model may be a model trained to extract text related to a request from successive sentences.

According to an embodiment of the present disclosure, a non-transitory computer-readable recording medium may store a program to cause a computer to perform at least one of the embodiments of the disclosed method.

According to an embodiment of the present disclosure, the computer program may be stored in the medium to cause the computer to perform at least one of the embodiments of the disclosed method.

### Brief Description of Drawings

FIG. 1 is a diagram for describing a method of controlling a device based on a target text extracted from a user's utterance, according to an embodiment of the present disclosure.
FIG. 2 is a conceptual diagram for describing an operation of controlling a device based on a target text extracted from a user's utterance, according to an embodiment of the present disclosure.
FIG. 3 is a flowchart illustrating a method of controlling a device based on a target text extracted from a user's utterance, according to an embodiment of the present disclosure.
FIG. 4 is a flowchart for describing an operation of converting an utterance to text, according to an embodiment of the present disclosure.
FIG. 5 is a flowchart for describing a method of utilizing a wake-up word, according to an embodiment of the disclosure.
FIG. 6 is a conceptual diagram for describing an operation of extracting a target text from a user's utterance, according to an embodiment of the present disclosure.
FIG. 7 is a flowchart for describing a method of extracting a target text by using a tokenized utterance, according to an embodiment of the disclosure.
FIGS. 8A to 8C are diagrams for describing a method of extracting a target text from a user's utterance, according to an embodiment of the present disclosure.
FIG. 9 is a flowchart for describing a detailed method of extracting a target text, according to an embodiment of the present disclosure.
FIG. 10 is a flowchart illustrating a method of controlling a device based on a target text extracted from a user's utterance, according to an embodiment of the present disclosure.
FIG. 11 is a conceptual diagram for describing an operation of canceling noise from a target text, according to an embodiment of the present disclosure.
FIG. 12 is a flowchart illustrating a method of canceling noise from a target text, according to an embodiment of the present disclosure.
FIG. 13 is a diagram for describing a method of controlling another device based on a target text extracted from a user's utterance, according to an embodiment of the present disclosure.
FIG. 14 is a diagram for describing a method of controlling a device based on a target text extracted from utterances of a plurality of users, according to an embodiment of the present disclosure.
FIG. 15 is a diagram for describing a configuration of a computing apparatus for controlling a device based on a target text extracted from a user's utterance, according to an embodiment of the present disclosure.

### Mode for the Invention

Description of technological content well-known in the art or not directly related to the disclosure will be omitted herein. Through the omission of the content that might otherwise obscure the subject matter of the disclosure, the subject matter will be understood more clearly. Furthermore, the terms, as will be mentioned later, are defined by taking functionalities in the disclosure into account, but may vary depending on practices or intentions of users or operators. Accordingly, the terms should be defined based on descriptions throughout this specification.

For the same reason, some parts in the accompanying drawings are exaggerated, omitted or schematically illustrated. The size of the respective elements may not fully reflect their actual size. In the drawings, the same or corresponding components are given the same reference numerals.

Advantages and features of the disclosure, and methods for attaining them will be understood more clearly with reference to the following embodiments, which will be described in detail later along with the accompanying drawings. The present disclosure is not, however, limited to embodiments as will be described below, but may be implemented in many different forms. The embodiments of the disclosure are provided to make the disclosure complete and make the scope of the disclosure fully understood by those of ordinary skill in the art. An embodiment of the present disclosure may be defined according to the appended claims. Throughout the specification, like reference numerals refer to like elements. In describing an embodiment of the present disclosure, when it is determined that a detailed description of related functions or configurations may unnecessarily obscure the subject matter of the present disclosure, the detailed description will be omitted. Furthermore, the terms, as will be mentioned later, are defined by taking functionalities in the disclosure into account, but may vary depending on practices or intentions of users or operators. Accordingly, the terms should be defined based on descriptions throughout this specification.

In an embodiment, respective blocks and combinations thereof in flowcharts will be performed by computer program instructions. The computer program instructions may be loaded to a processor of a universal computer, a special-purpose computer, or other programmable data processing equipment, and may thus generate means for performing functions described in the block(s) of the flowcharts when executed by the processor of the computer or the other programmable data processing equipment. The computer program instructions may also be stored in computer-usable or computer-readable memories oriented for computers or other programmable data processing equipment, and it is also possible to manufacture a product that contains instruction means for performing functions described in the block(s) of the flowchart. The computer program instructions may also be loaded onto a computer or other programmable data processing equipment.

Furthermore, each block of the flowchart may represent a part of a module, segment, or codes including one or more executable instructions to perform particular logic function(s). In an embodiment, it is also possible that the functions recited in the blocks occur out of the sequence. For example, two successive blocks may be performed substantially at the same time or in reverse order depending on the corresponding functions.

The term "module" (or sometimes "unit") as used herein may refer to a software or hardware component, such as a field programmable gate array (FPGA) or an application specific integrated circuit (ASIC), which may perform a particular function. However, the module is not limited to software or hardware. The module may be configured to be stored in an addressable storage medium, or to execute one or more processors. In an embodiment, the modules may include components, such as software components, object-oriented software components, class components and task components, processes, functions, attributes, procedures, subroutines, segments of program codes, drivers, firmware, microcodes, circuits, data, databases, data structures, tables, arrays, and variables. Functions provided through certain components or certain modules may be combined to reduce the number or divided into additional components. In an embodiment, the module may include one or more processors.

The embodiments of the present disclosure relate to a method of controlling a device based on a command extracted from an utterance of the user. Prior to describing the embodiments in detail, the terms often used in the specification will be defined.

In the present disclosure, the term language model may refer to an artificial intelligence (AI) model that allocates probabilities to word sequences to obtain the most natural word sequence. For example, the language model may obtain text as input data and extract a target word sequence from the obtained text. A different word sequence may be extracted depending on the purpose of the language model. For example, the language model may extract a word sequence related to a command to control the device from the text.

Although the term language model is used in the present disclosure, the present disclosure is not limited thereto, and the language model may also be represented as a generative model, an AI model, a language generation model, a natural language processing model, a text generation model, a chat simulator, an interactive AI and natural language understanding and generation system, etc., depending on the purpose. Among language models, a large language model may be a language model comprised of an artificial neural network that has much more parameters.

A method of controlling a device based on a command extracted from an utterance of a user and a computing apparatus for performing the method will now be described in accordance with embodiments of the present disclosure with reference to accompanying drawings.

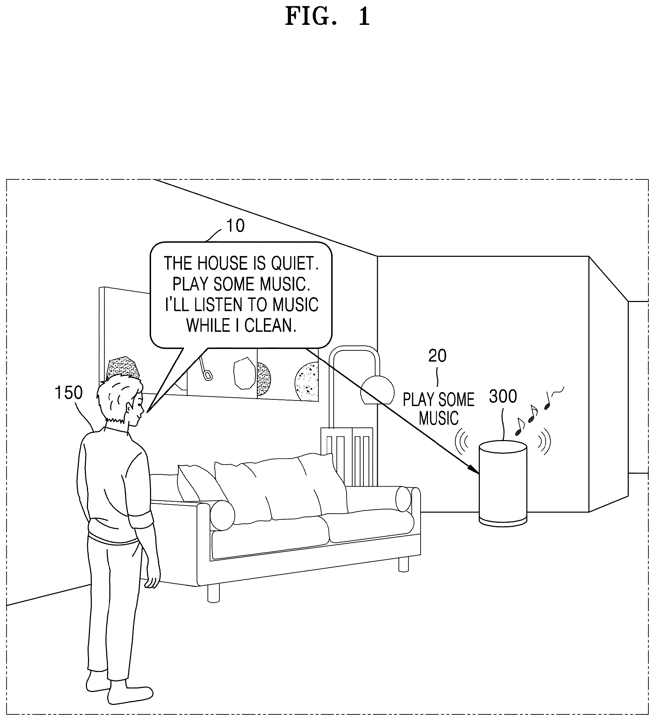

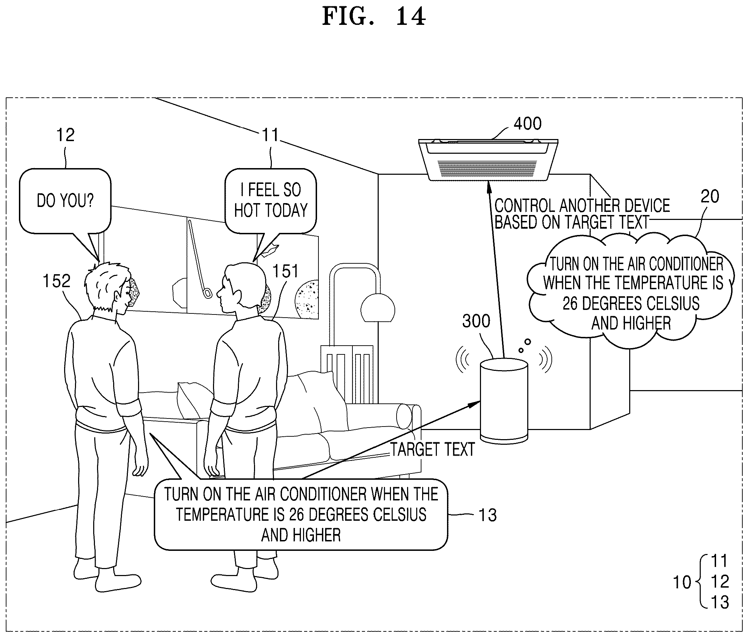

Processes as described in the present disclosure are assumed to be performed by a computing apparatus that supports a natural language processing function. Accordingly, in describing FIGS. 1 to 14, the computing apparatus will be described as performing the processes. Detailed components included in the computing apparatus according to an embodiment are shown in FIG. 14, and will be described later in detail.

FIG. 1 is a diagram for describing a method of controlling a device based on a target text extracted from a user's utterance, according to an embodiment of the present disclosure.

Referring to FIG. 1, a computing apparatus may control a device 300 based on a target text 20 extracted from an utterance 10 of a user.

The computing apparatus is not shown in FIG. 1, but may be built into the device 300 or may be an extra device that receives the utterance 10 of the user and delivers a command to the device 300 according to the target text 20. The disclosure is not limited to the method of implementing the computing apparatus.

The device 300 is shown in FIG. 1 as any device, and the present disclosure is not limited to the type of the device 300. For example, the device 300 may include an electronic device such as a mobile phone, an audio system, a television, a computer, or the like.

In an embodiment, the computing apparatus may obtain the utterance 10 uttered by a user 150. The computing apparatus may obtain the utterance 10 by recognizing a voice of the user 150. The computing apparatus may obtain the utterance 10 through an input interface, and for example, the input interface may include a microphone to receive the voice.

In an embodiment, the computing apparatus may determine whether the utterance 10 of the user includes the target text 20. The computing apparatus may use a language model to determine whether the target text 20 is included in the utterance 10.

In an embodiment, the language model may extract a word sequence of the target text related to a command to request the device to perform a function from the input data by learning patterns and structures of training data. For example, the language model may determine whether the target text 20 is included in the utterance 10 of the user and extract the target text 20.

For example, the language model may refer to an AI model for obtaining the most natural word sequence by allocating probabilities to word sequences. In the present disclosure, the language model may be an AI model retrained to extract a word sequence of the target text from the utterance of the user. The language model may be a model fine-tuned to extract a target text from an utterance of the user. The disclosure is not limited to a fine-tuning method.

For example, the user 150 may utter "The house is quiet. Play some music. I'll listen to music while I clean". The utterance 10 may include the target text 20 and non-target text.

In an embodiment, the target text 20 may be text to request the device 300 to perform a function. The target text 20 may be a command for the device 300. The target text 20 may be text that is recognizable to the device 300 as input data, and the device 300 may perform a certain function based on the target text 20.

For example, for the device 300 that is able to play music, the text data "play some music" may be the target text 20 requesting the device 300 to perform a function.

In an embodiment, the non-target text may be other text than the target text 20 of the utterance 10. For example, for the device 300 that is able to play music, the text data "the house is quiet" may be the non-target text, which is unable to request the device 300 to perform the function. In another example, for the device 300 that is able to play music, the text data "I'll turn on music and clean" may be the non-target text, which is unable to request the device 300 to perform the function.

In an embodiment, however, the target text 20 and the non-target text may be distinguished according to the function provided by the device 300. For example, for the device 300 that is able to play music, the text data "play some music" may be the target text 20, but for the device 300 unrelated to playing music, the text data "play some music" may be the non-target text.

In an embodiment, the language model may be trained to determine whether the target text 20 is included in the utterance 10 by considering the function provided by the device 300. The language model may determine whether the target text 20 is included in the utterance 10 by considering the function provided by the device 300. For example, the language model may determine whether the target text 20 requesting to perform a first function is included in the utterance 10 for a first device that performs the first function, and determine whether the target text 20 requesting to perform a second function is included in the utterance 10 for a second device that performs the second function.

In an embodiment, the computing apparatus may extract the target text 20 when the target text 20 is included in the utterance 10 of the user. The computing apparatus may classify text data of the utterance 10 of the user into the target text 20 and the non-target text, and extract the target text 20.

In an embodiment, the computing apparatus may control the device 300 based on the target text 20.

For example, the computing apparatus may control the device 300 to play music based on the target text 20 "play some music". However, the function of the device 300 is merely an example, and the present disclosure is not limited thereto. In another example, the computing apparatus may obtain a target text "turn on the light", and control the device 300 to turn on a light based on the target text.

Although the device 300 is shown in singular in FIG. 1, the present disclosure is not limited to the number of devices 300. For example, the device 300 may include the first device and the second device.

In an embodiment, the computing apparatus may obtain a first target text that requests the first device to perform a function from the utterance 10 of the user. The computing apparatus may control the first device based on the obtained first target text.

In an embodiment, the computing apparatus may obtain the first target text that requests the first device to perform a function and a second target text that requests the second device to perform a function from the utterance 10 of the user. The computing apparatus may control the first device and the second device based on the obtained first target text and second target text.

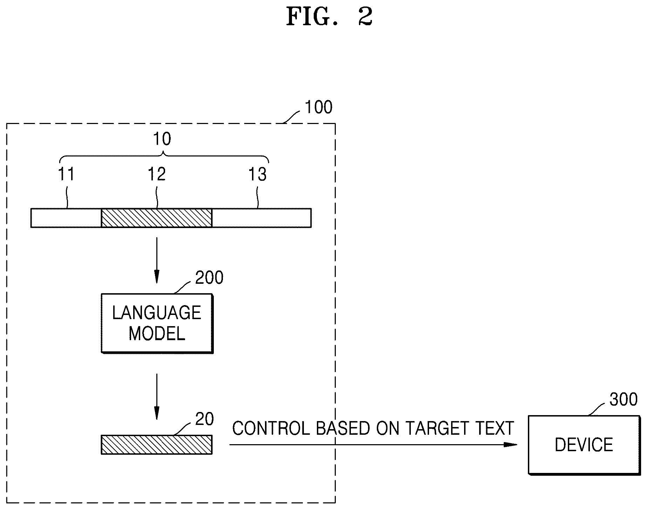

FIG. 2 is a conceptual diagram for describing an operation of controlling a device based on a target text extracted from an utterance of a user, according to an embodiment of the present disclosure.

For convenience of explanation, overlapping descriptions with FIG. 1 will be described briefly or not repeated.

Referring to FIG. 2, the computing apparatus 100 may obtain the utterance 10 of the user. For reference, the computing apparatus 100 may refer to a processor of the computing apparatus, and operations of the computing apparatus 100 may be performed by the processor of the computing apparatus.

In an embodiment, the utterance 10 of the user may be a voice input uttered by the user and may be processed by a language model 200. The utterance 10 of the user may include a first utterance 11, a second utterance 12 and a third utterance 13. However, the first to third utterances 11, 12 and 13 are distinguished only for convenience of explanation, and the present disclosure is not limited to the number, length, location, etc., of the texts to be distinguished.

In an embodiment, the computing apparatus 100 may use the language model 200 to determine whether the utterance 10 includes the target text 20 that requests the device 300 to perform a function. The computing apparatus 100 may use the language model 200 to extract the target text 20 from the utterance 10.

For example, the computing apparatus 100 may use the language model 200 to determine the second utterance 12 included in the utterance 10 as the target text 20. The computing apparatus 100 may use the language model 200 to determine the first utterance 11 and the third utterance 13 included in the utterance 10 as the non-target text 13. The computing apparatus 100 may use the language model 200 to extract the second utterance 12 as the target text 20.

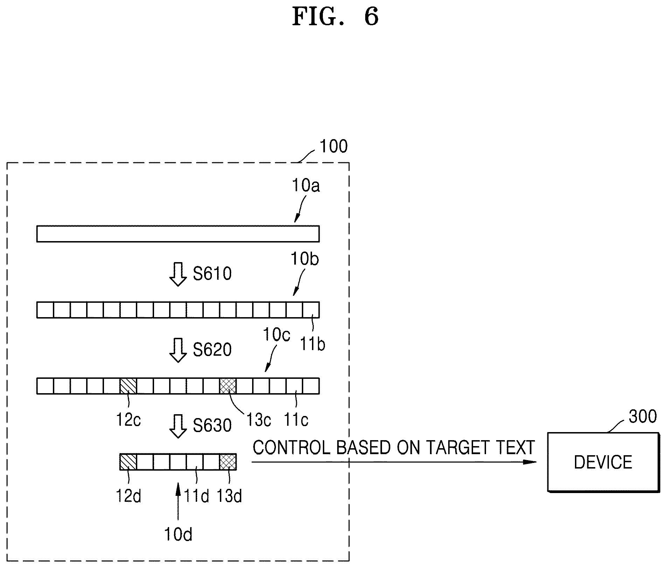

An operation of the language model 200 for extracting the target text 20 will be described in detail in connection with FIG. 6.

In an embodiment, the computing apparatus 100 may control the device 300 based on the extracted target text 20.

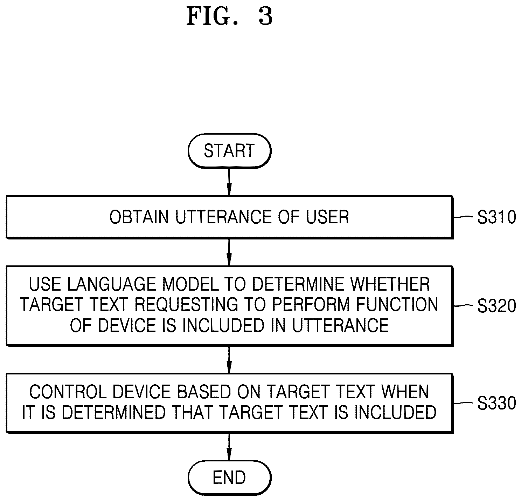

FIG. 3 is a flowchart illustrating a method of controlling a device based on a target text extracted from an utterance of a user, according to an embodiment of the present disclosure.

For convenience of explanation, overlapping descriptions with FIGS. 1 and 2 will be described briefly or not repeated.

Referring to FIG. 3, in operation S310, the computing apparatus may obtain an utterance of the user.

In an embodiment, the computing apparatus may obtain an utterance from a user input. The computing apparatus may obtain an utterance input by the user using an input interface. For example, the utterance may be a voice input, and the computing apparatus may obtain the user's voice as an utterance.

In an embodiment, the computing apparatus may receive an utterance from an external device. The computing apparatus may receive, from the external device, a user voice input by the external device.

In operation S320, the computing apparatus may use a language model to determine whether a target text requesting the device to perform a function is included in the utterance.

In an embodiment, the language model may extract a word sequence of the target text related to a command to request the device to perform a function from the input data by learning patterns and structures of training data. For example, the language model may determine whether a target text is included in the utterance of the user and extract the target text.

In an embodiment, the computing apparatus may input an utterance of the user to the language model, and use the language model to determine whether a target text is included in the utterance. The computing apparatus may use the language model to classify word sequences into a target text and a non-target text. The computing apparatus may use the language model to determine whether there is the target text among the word sequences in the utterance.

In operation S330, the computing apparatus may control the device based on the target text when determining that the target text is included.

In an embodiment, the computing apparatus may obtain the target text when determining that the target text is included in the utterance of the user. The computing apparatus may extract the target text from the utterance of the user.

In an embodiment, the computing apparatus may control the device based on the extracted target text. The extracted target text may be text related to a command to request the device to perform a function. The computing apparatus may control the device at the request for the device to perform a function intended by the target text.

In an embodiment, the computing apparatus may use a language model to determine whether the target text requesting the device to perform the function is included, and control the device based on the target text.

In an embodiment, the computing apparatus may use a language model to determine whether a target text requesting the device to perform a function is included. When the target text is included in an utterance of a target user, the computing apparatus may determine whether the device to be controlled is allowed to process the request of the target text. When the device to be controlled is allowed to process the request of the target text, the computing apparatus may control the device based on the target text. When the device to be controlled is not allowed to process the request of the target text, the computing apparatus may re-determine that the extracted target text is the non-target text.

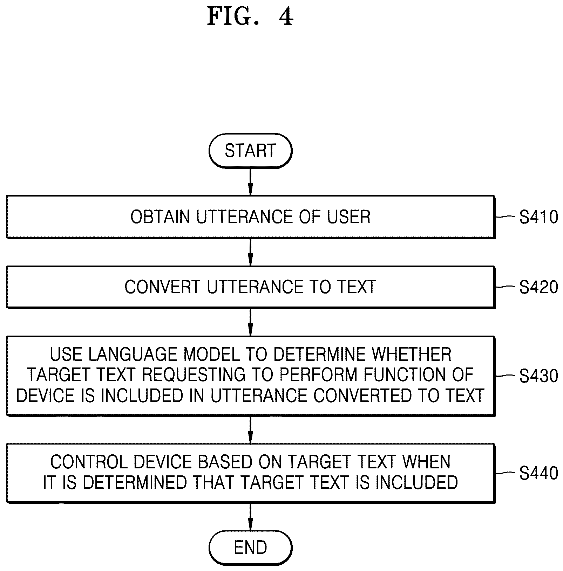

FIG. 4 is a flowchart for describing an operation of converting an utterance to text, according to an embodiment of the present disclosure.

For convenience of explanation, overlapping descriptions with FIG. 3 will be described briefly or not repeated.

Referring to FIG. 4, in operation S410, the computing apparatus may obtain an utterance. Operation S410 corresponds to operation S310 of FIG. 3, so the description thereof will not be repeated.

In operation S420, the computing apparatus may convert an utterance to text.

In an embodiment, the utterance obtained in operation S410 may be voice data uttered by the user.

In an embodiment, the computing apparatus may convert the utterance obtained from the voice data to text data. The computing apparatus may use a speech-to-text technology to convert the utterance, which is the voice data, to text. For example, the computing apparatus may use a sequence-to-sequence (seq2seq) model, an attention mechanism, etc., to convert the utterance to text, but the disclosure is not limited to the speech-to-text mechanism that converts the voice to text.

In operation S430, the computing apparatus may use a language model to determine whether a target text requesting the device to perform a function is included in the utterance converted to text.

Operation S430 corresponds to operation S320 of FIG. 3, so the description thereof will not be repeated.

In an embodiment, the language model may extract a word sequence of the target text related to a command to request the device to perform a function from the input data by learning patterns and structures of training data. The computing apparatus may input the utterance of the user converted to text to the language model, and use the language model to determine whether a target text is included in the utterance.

In operation S440, the computing apparatus may control the device based on the target text when determining that the target text is included. Operation S440 corresponds to operation S330 of FIG. 3, so the description thereof will not be repeated.

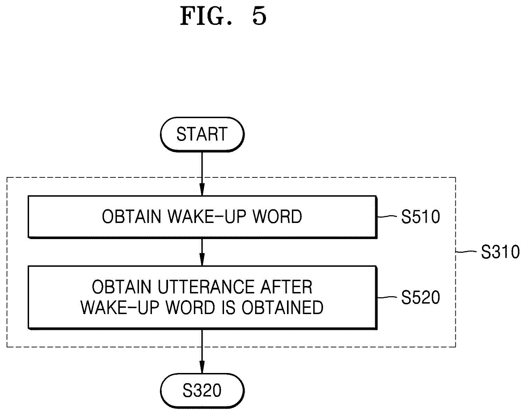

FIG. 5 is a flowchart for describing a method of utilizing a wake-up word, according to an embodiment of the disclosure.

For convenience of explanation, overlapping descriptions with FIG. 3 will be described briefly or not repeated.

Referring to FIG. 5, operation S310 of FIG. 3 may include operation S510 and operation S520.

In operation S510, the computing apparatus may obtain a wake-up word. After recognizing the wake-up word in the voice of the user, the computing apparatus may be switched into a mode for obtaining the voice of the user uttered after the wake-up word. For example, the computing apparatus may perform an operation in a mode for detecting only the utterance of the wake-up word without obtaining the voice of the user before recognizing the wake-up word, and enter a mode for obtaining all the voices of the user after recognizing the wake-up word.

After recognizing the wake-up word, the computing apparatus may obtain an utterance after the wake-up word is obtained in operation S520.

In an embodiment, the computing apparatus may obtain the wake-up word from a user input. The computing apparatus may use the input interface to obtain the wake-up word input by the user. For example, the wake-up word may be a voice input, and the computing apparatus may obtain a voice uttered by the user as the wake-up word.

In an embodiment, the wake-up word may be a standby signal for the computing apparatus to receive an utterance of the user as an input. For example, the computing apparatus may recognize the wake-up word from a voice of the user, and obtain the subsequent voice of the user as an utterance of the user. The computing apparatus may extract the target text based on the obtained utterance of the user, and control the device based on the extracted target text.

In an embodiment, it is obvious that the wake-up word may include a designated keyword and may be newly designated by the user. For example, when a voice of 'hi' is included in the voice uttered by the user, the computing apparatus may recognize the voice 'hi' as the wake-up word. The computing apparatus may obtain the user's voice occurring after the wake-up word as an utterance, and control the device based on the utterance.

FIG. 6 is a conceptual diagram for describing an operation of extracting a target text from an utterance of a user, according to an embodiment of the present disclosure.

For convenience of explanation, overlapping descriptions with FIG. 2 will be described briefly or not repeated.

Referring to FIG. 6, the computing apparatus 100 may obtain a target text 10d by preprocessing an utterance 10a of the user, and control the device 300 based on the target text 10d. For reference, the computing apparatus 100 may refer to a processor of the computing apparatus, and operations of the computing apparatus 100 may be performed by the processor of the computing apparatus.

Furthermore, an operation of the computing apparatus 100 may refer to an operation performed by the computing apparatus using a language model. Operations S610 to 630 of FIG. 6 may be performed by the language model, and the computing apparatus may obtain a result performed by the language model to control the device 300.

In an embodiment, the computing apparatus 100 may obtain the utterance 10a of the user. The utterance 10a of the user may be obtained through the voice, and may be data converted to text by using a speech-to-text technology.

In operation S610, the computing apparatus 100 may tokenize the obtained utterance 10b of the user.

In the present disclosure, the tokenization is a portion of a text data pre-process, and refers to a task of dividing given text data into small unit elements. The divided unit elements may include tokens. The tokens may refer to units into which the text data is divided, and may be variously set according to the purpose of a task that the user wants to perform. For example, the token may be set to a unit such as a word (a word segment) or a letter, but the disclosure is not limited thereto.

For example, the token may be divided into certain units easy to process according to the language type, the type of a program to process data, etc., but the disclosure is not limited thereto.

Furthermore, tokenization may be variously used as a term such as word segmentation, lexical decomposition, sentence separation, etc., that divides linguistic data into small unit elements and process them, but the disclosure is not limited thereto.

In an embodiment, the computing apparatus 100 may obtain a plurality of tokens 11b by tokenizing the utterance 10b of the user. The plurality of tokens 11b may include text data divided into certain units.

In operation S620, the computing apparatus may sort out the plurality of tokens 11b. The computing apparatus may sort out a start token 12c and an end token 13c from the plurality of tokens 11b.

In an embodiment, an utterance 10c of the user may include a plurality of tokens. The plurality of tokens may include the start token 12c, the end token 13c and normal tokens 11c.

The start token 12c may be a token referring to a beginning of a target text that requests the device 300 to perform a function. The end token 13c may be a token referring to an end of the target text that requests the device 300 to perform the function. The normal tokens 11c may refer to the remaining tokens other than the start token 12c and the end token 13c among the plurality of tokens.

In an embodiment, the language model may determine, from input data, the start token 12c and the end token 13c corresponding to the beginning and the end, respectively, of the target text related to a command to request the device to perform the function by learning patterns and structures of training data. The language model may extract a word sequence of the target text from the utterance 10c of the user based on the start token 12c and the end token 13c. The computing apparatus may use the language model to extract the word sequence of the target text from the utterance 10c of the user.

In operation S630, the computing apparatus may obtain a target text 10d based on the start token 12d and the end token 13d.

In an embodiment, the start token 12d and the end token 13d may be arranged in order. In other words, the start token 12d may precede the end token 13d in the arrangement. When the start token 12d and the end token 13d are arranged in order, the computing apparatus may determine the text data from the start token 12d to the end token 13d as the target text 10d. The computing apparatus may obtain the target text 10d.

The target text 10d may include the start token 12d, normal tokens 11d arranged between the start token 12d and the end token 13d, and the end token 13d. The target text 10d may not include the normal tokens 11c arranged before the start token 12c or the normal tokens 11c arranged after the end token 13c among the utterance 10c of the user after operation S620 is performed.

In an embodiment, the computing apparatus 100 may control the device 300 based on the extracted target text 10d.

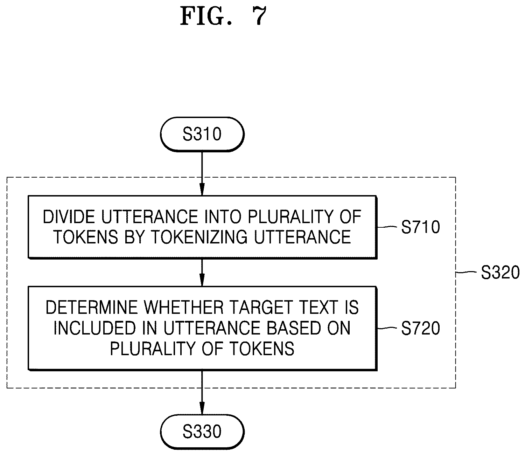

FIG. 7 is a flowchart for describing a method of extracting a target text by using a tokenized utterance, according to an embodiment of the disclosure.

For convenience of explanation, overlapping descriptions with FIG. 3 will be described briefly or not repeated.

Referring to FIG. 7, operation S320 of FIG. 3 may include operation S710 and operation S720.

In operation S710, the computing apparatus may obtain a plurality of tokens by tokenizing an utterance. The computing apparatus may divide the utterance into the plurality of tokens by tokenizing the utterance.

In an embodiment, the computing apparatus may use a language model to tokenize the utterance to obtain the plurality of tokens. The tokenization is a portion of a text data pre-process, and refers to a task of dividing given text data into small unit elements. The computing apparatus may obtain utterance segments divided as small unit elements as tokens.

In an embodiment, the plurality of tokens may include a start token and an end token. The computing apparatus may set a start token and an end token as references for determining a target text, and obtain a plurality of tokens including the start token and the end token from an utterance of the user.

In operation S720, the computing apparatus may determine whether a target text is included in the utterance based on the plurality of tokens.

In an embodiment, the computing apparatus may use a language model to determine whether the target text is included in the utterance. The plurality of tokens may include the start token referring to a beginning of the target text and the end token referring to an end of the target text. The computing apparatus may determine whether the target text is included in an utterance by considering locations of the start token and the end token.

For example, the computing apparatus may set the text data from the start token to the end token as the target text, and determine whether there is a target text by considering locations of the start token and the end token among the plurality of tokens divided from the utterance.

In an embodiment, the computing apparatus may extract the target text from the utterance of the user when determining that the target text is included. The computing apparatus may control the device based on the target text.

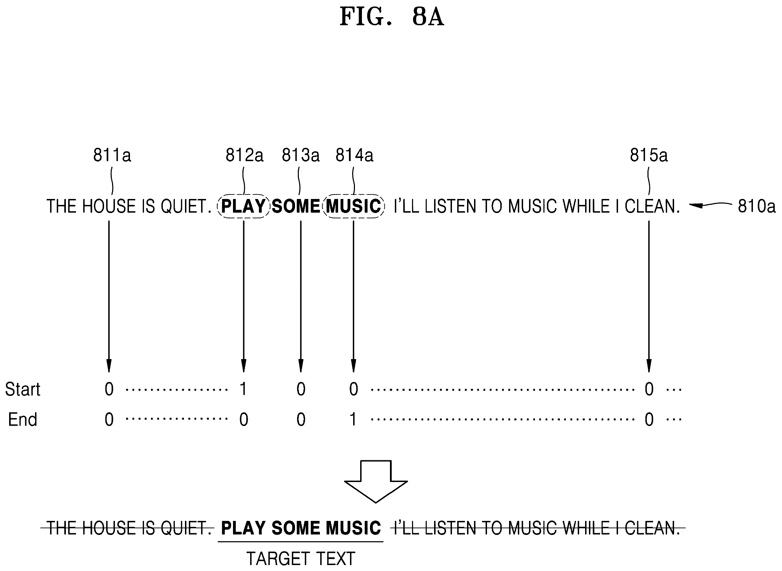

The operation of determining whether the target text is included in the utterance based on the plurality of tokens will be described in detail with illustrations of FIGS. 8A to 8C.

FIGS. 8A to 8C are diagrams for describing a method of extracting a target text from an utterance of a user, according to an embodiment of the present disclosure.

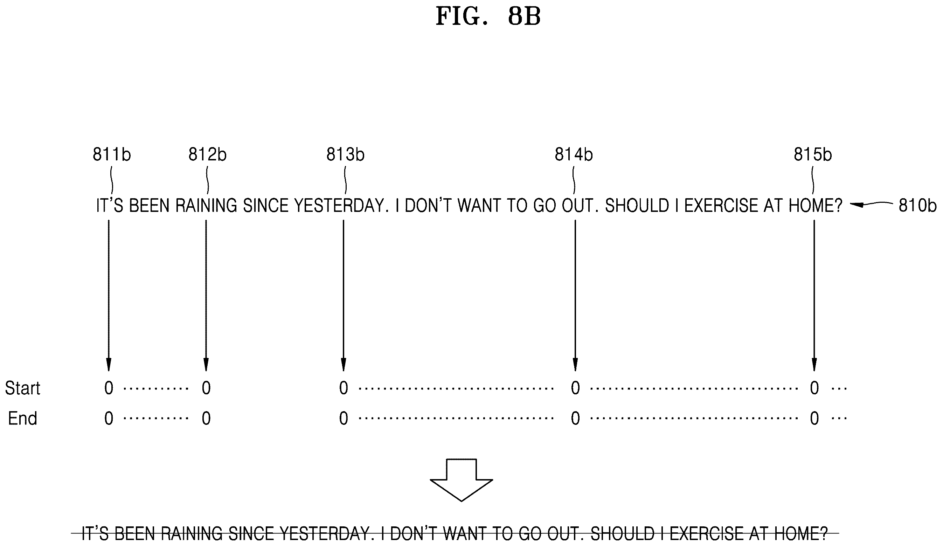

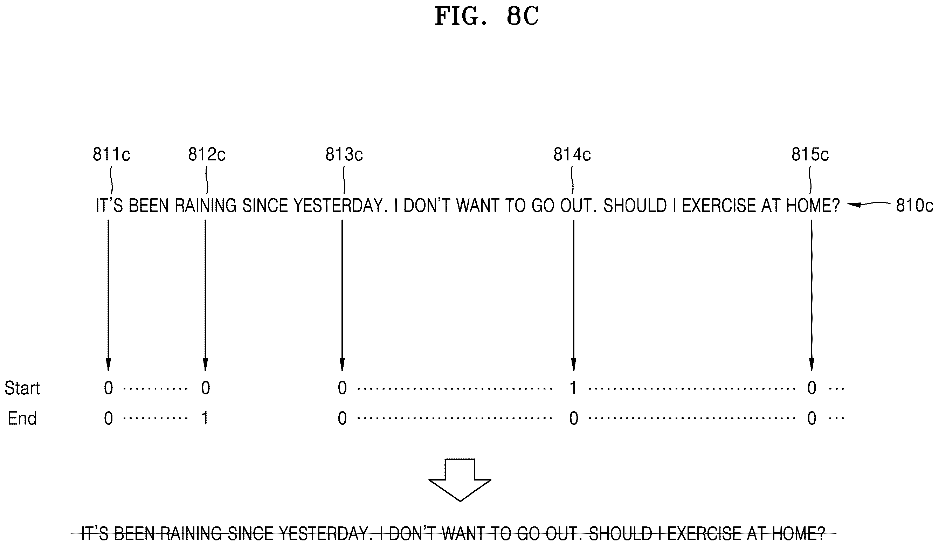

For reference, FIG. 8A is a diagram for describing an example in which it is determined that the target text is included in the utterance of the user. FIGS. 8B and 8C are diagrams for describing an example in which it is determined that the target text is included in the utterance of the user.

For convenience of explanation, overlapping descriptions with FIGS. 6 and 7 will be described briefly or not repeated.

Referring to FIG. 8A, the computing apparatus may obtain an utterance 810a of the user. Although the obtained utterance 810a of the user is shown as text data, it may be voice data, which may be converted to text data through a speech-to-text technology.

For example, the utterance 810a of the user may be linguistic data: "The house is quiet. Play some music. I'll listen to music while I clean". The linguistic data may include one of voice data and text data, and may refer to data that may be expressed in a language.

In an embodiment, the computing apparatus may obtain a plurality of tokens by tokenizing the utterance 810a of the user. In FIGS. 8A to 8C, shown is tokenization of the utterance 810a of the user as an example of a task in which the utterance 810a of the user is divided into word segments, one word segment corresponding to one token. That is, each word segment in the utterance 810a of the user corresponds to each token. It is obvious that the disclosure is not limited to a tokenization unit for the utterance 810a of the user and the utterance 810a of the user is just divided into word segments for convenience of explanation.

In an embodiment, the plurality of tokens in the utterance 810a of the user may include a first token 811a, a second token 812a, a third token 813a, a fourth token 814a and a fifth token 815a.

In an embodiment, the computing apparatus may use a language model to sort out a start token and an end token from the plurality of tokens in the utterance 810a of the user. The language model may sort out, from the utterance 810a of the user, the start token and the end token corresponding to the beginning and the end, respectively, of the target text related to a command to request the device to perform the function by learning patterns and structures of training data.

In an embodiment, the language model may calculate a confidence score of each token about whether the token corresponds to the start token or the end token.

The language model may determine that a token whose confidence score about whether it corresponds to the start token exceeds a threshold is the start token. For convenience of explanation, in FIG. 8A, a token determined as the start token is denoted by a value of 1 and a token not determined as the start token is denoted by a value of 0.

Furthermore, the language model may determine that a token whose confidence score about whether it corresponds to the end token exceeds a threshold is the end token. For convenience of explanation, in FIG. 8A, a token determined as the end token is denoted by a value of 1 and a token not determined as the end token is denoted by a value of 0.

In an embodiment, the start token may be a token referring to a beginning of a target text that requests a device to perform a function among the plurality of tokens. As shown in FIG. 8A, the computing apparatus may determine that the second token 812a is the start token. The computing apparatus may use the language model to determine the start token corresponding to the beginning of the target text related to a command to request the device to perform a function.

In an embodiment, the end token may be a token referring to an end of the target text that requests the device to perform the function among the plurality of tokens. As shown in FIG. 8A, the computing apparatus may determine that the fourth token 814a is the end token. The computing apparatus may use the language model to determine the end token corresponding to the end of the target text related to a command to request the device to perform the function.

Specifically, in the example of FIG. 8A, the language model may calculate a confidence score of the first token 811a of the utterance 810a of the user. The language model may calculate a first confidence score related to whether the first token 811a corresponds to the start token and calculate a second confidence score related to whether the first token 811a corresponds to the end token. In response to determining that the first confidence score does not exceed the threshold, the language model may determine that the first token 811a is not the start token. In response to determining that the second confidence score does not exceed the threshold, the language model may determine that the first token 811a is not the end token.

As a result, in FIG. 8A, the first token 811a is denoted by a value of 0 with respect to whether it is the start token, and the first token 811a is denoted by a value of 0 with respect to whether it is the end token.

A method by which the language model determines whether the third token 813a and the fifth token 815a are the start token or the end token of the utterance 810a of the user is the same as what is described by using the first token 811a, so the description will not be repeated for convenience of explanation.

In an embodiment, the language model may calculate a confidence score of the second token 812a of the utterance 810a of the user. The language model may calculate the first confidence score related to whether the second token 812a corresponds to the start token and calculate the second confidence score related to whether the second token 812a corresponds to the end token. In response to determining that the first confidence score exceeds the threshold, the language model may determine that the second token 812a is the start token. In response to determining that the second confidence score does not exceed the threshold, the language model may determine that the second token 812a is not the end token.

As a result, in FIG. 8A, the second token 812a is denoted by a value of 1 with respect to whether it is the start token, and the second token 812a is denoted by a value of 0 with respect to whether it is the end token.

In an embodiment, the language model may calculate a confidence score of the fourth token 814a of the utterance 810a of the user. The language model may calculate the first confidence score related to whether the fourth token 814a corresponds to the start token and calculate the second confidence score related to whether the fourth token 814a corresponds to the end token. In response to determining that the first confidence score does not exceed the threshold, the language model may determine that the fourth token 814a is not the start token. In response to determining that the second confidence score exceeds the threshold, the language model may determine that the fourth token 814a is the end token.

As a result, in FIG. 8A, the fourth token 814a is denoted by a value of 0 with respect to whether it is the start token, and the fourth token 814a is denoted by a value of 1 with respect to whether it is the end token.

It is obvious that the description is focused on the first to fifth tokens 810a to 810e among the plurality of tokens in the utterance 810a of the user as an example for convenience of explanation, but an operation of determining whether each of the plurality of tokens is the start token or the end token may be equally performed for the token.

In an embodiment, the computing apparatus may distinguish the target text based on the start token and the end token. The computing apparatus may extract the target text based on the start token and the end token. The computing apparatus may extract the target text based on the second token 812a determined as the start token and the fourth token 814a determined as the end token. The computing apparatus may determine the text data from the start token to the end token as the target text when the start token and the end token are arranged in order.

For example, the computing apparatus may use the language model to determine the second token 812a of the utterance 810a of the user as the start token. The computing apparatus may use the language model to determine the fourth token 814a of the utterance 810a of the user as the end token. The computing apparatus may determine a token sequence from 'play' to 'music' as the target text. Accordingly, the computing apparatus may extract the target text 'play some music' from the utterance 810a of the user.

Referring to FIG. 8B, the computing apparatus may obtain an utterance 810b of the user. Although the obtained utterance 810b of the user is shown as text data, it may be voice data, which may be converted to text data through a speech-to-text technology.

For example, the utterance 810b of the user may be linguistic data: "It's been raining since yesterday. I don't want to go out. Should I exercise at home?". The linguistic data may include one of voice data and text data, and may refer to data that may be expressed in a language.

In an embodiment, the computing apparatus may obtain a plurality of tokens 811b to 815b by tokenizing the utterance 810b of the user. Although each syllable in the utterance 810b of the user is shown as corresponding to each token, the disclosure is not limited to the tokenization unit for the utterance 810b of the user.

In an embodiment, the plurality of tokens may include a first token 811b, a second token 812b, a third token 813b, a fourth token 814b and a fifth token 815b. In FIG. 8B, the first to fifth tokens 811b to 815b are merely selected from among the plurality of tokens for convenience of explanation.

In an embodiment, the computing apparatus may use a language model to sort out a start token and an end token from the utterance 810b of the user. The language model may determine that a token whose confidence score about whether it corresponds to the start token exceeds a threshold is the start token. The language model may determine that a token whose confidence score about whether it corresponds to the end token exceeds a threshold is the end token.

Specifically, in the example of FIG. 8B, the language model may calculate a confidence score of the first token 811b of the utterance 810b of the user. The language model may calculate a first confidence score related to whether the first token 811b corresponds to the start token and calculate a second confidence score related to whether the first token 811b corresponds to the end token. In response to determining that the first confidence score does not exceed the threshold, the language model may determine that the first token 811b is not the start token. In response to determining that the second confidence score does not exceed the threshold, the language model may determine that the first token 811b is not the end token.

As a result, in FIG. 8B, the first token 811b is denoted by a value of 0 with respect to whether it is the start token, and the first token 811b is denoted by a value of 0 with respect to whether it is the end token.

Likewise, the language model may calculate confidence scores of the second to fifth tokens 812b to 812b of the utterance 810b of the user. The language model may determine that each of the second to fifth tokens 812b to 815b is not the start token in response to determining that the first confidence scores calculated for the second to fifth tokens 812b to 815b do not exceed the threshold. The language model may determine that each of the second to fifth tokens 812b to 815b is not the end token in response to determining that the second confidence scores calculated for the second to fifth tokens 812b to 815b do not exceed the threshold.

As a result, in FIG. 8B, the second to fifth tokens 812b to 815b are denoted by a value of 0 with respect to whether they are each the start token, and the second to fifth tokens 812b to 815b are denoted by a value of 0 with respect to whether they are each the end token.

It is obvious that the description is focused on the first to fifth tokens 811b to 815b among the plurality of tokens in the utterance 810b of the user for convenience of explanation, but the operation of determining whether each of the plurality of tokens is the start token or the end token may be equally performed for the token.

In an embodiment, the computing apparatus may extract a target text based on the determination of whether it is the start token or the end token. The computing apparatus may determine that there is no target text in the utterance 810b of the user when no start button nor end token is detected. The computing apparatus may determine that there is no target text in the utterance 810b of the user, and determine that all the text data in the utterance 810b of the user is non-target text.

Referring to FIG. 8C, the computing apparatus may obtain an utterance 810c of the user. Although the obtained utterance 810c of the user is shown as text data, it may be voice data, which may be converted to text data through a speech-to-text technology.

For example, the utterance 810c of the user may be linguistic data: "It's been raining since yesterday. I don't want to go out. Should I exercise at home?". The linguistic data may include one of voice data and text data, and may refer to data that may be expressed in a language.

In an embodiment, the computing apparatus may obtain a plurality of tokens by tokenizing the utterance 810c of the user. Although each syllable in the utterance 810c of the user is shown as corresponding to each token, the disclosure is not limited to the tokenization unit for the utterance 810c of the user.

In an embodiment, the plurality of tokens in the utterance 810c of the user may include a first token 811c, a second token 812c, a third token 813c, a fourth token 814c and a fifth token 815c.

In an embodiment, the computing apparatus may use a language model to sort out a start token and an end token from the plurality of tokens 811c to 815c in the utterance 810c of the user. The language model may determine that a token whose confidence score about whether it corresponds to the start token exceeds a threshold is the start token. The language model may determine that a token whose confidence score about whether it corresponds to the end token exceeds a threshold is the end token.

Specifically, in the example of FIG. 8C, the language model may calculate a confidence score of the first token 811c of the utterance 810c of the user. The language model may calculate a first confidence score related to whether the first token 811c corresponds to the start token and calculate a second confidence score related to whether the first token 811c corresponds to the end token. In response to determining that the first confidence score does not exceed the threshold, the language model may determine that the first token 811c is not the start token. In response to determining that the second confidence score does not exceed the threshold, the language model may determine that the first token 811c is not the end token.

As a result, in FIG. 8C, the first token 811c is denoted by a value of 0 with respect to whether it is the start token, and the first token 811c is denoted by a value of 0 with respect to whether it is the end token.

A method by which the language model determines whether the third token 813c and the fifth token 815c are the start token or the end token of the utterance 810c of the user is the same as what is described by using the first token 811c, so the description will not be repeated for convenience of explanation.

In an embodiment, the language model may calculate a confidence score of the second token 812c of the utterance 810c of the user. The language model may calculate a first confidence score related to whether the second token 812c corresponds to the start token and calculate a second confidence score related to whether the second token 812c corresponds to the end token. In response to determining that the first confidence score does not exceed the threshold, the language model may determine that the second token 812c is not the start token. In response to determining that the second confidence score exceeds the threshold, the language model may determine that the second token 812c is the end token.

As a result, in FIG. 8C, the second token 812c is denoted by a value of 0 with respect to whether it is the start token, and the second token 812c is denoted by a value of 1 with respect to whether it is the end token.

In an embodiment, the language model may calculate a confidence score of the fourth token 814c of the utterance 810c of the user. The language model may calculate a first confidence score related to whether the fourth token 814c corresponds to the start token and calculate a second confidence score related to whether the fourth token 814c corresponds to the end token. In response to determining that the first confidence score exceeds the threshold, the language model may determine that the fourth token 814c is the start token. In response to determining that the second confidence score does not exceed the threshold, the language model may determine that the fourth token 814c is not the end token.

As a result, in FIG. 8C, the fourth token 814c is denoted by a value of 1 with respect to whether it is the start token, and the fourth token 814c is denoted by a value of 0 with respect to whether it is the end token.

In an embodiment, the computing apparatus may extract a target text based on the start token and the end token. The computing apparatus may not determine the text data from the end token to the start token as the target text when the start token and the end token are arranged in reverse order. The computing apparatus may determine text in a range from the end token to the start token as non-target text when the start token and the end token are arranged in reverse order in the utterance.

In an embodiment, the computing apparatus may determine that there is no target text in the utterance 810c of the user, and determine that all the text data in the utterance 810c of the user is the non-target text.

In an embodiment of the present disclosure, the computing apparatus may use the language model to sort out each of the start token and the end token, and determine that there is a target text when the start token corresponding to the beginning of the target text and the end token corresponding to the end of the target text are detected correctly in order. With this, even when the start token or the end token are detected incorrectly, whether a target text is included in the utterance 810c of the user may be correctly determined by considering whether the start token and the end token are arranged in order.

Although not shown in FIGS. 8B and 8C, there may be more examples in which the computing apparatus determines that no target text is included. For example, the computing apparatus may use the language model to detect one start token only in an utterance of the user. With the one start token only, the computing apparatus may determine that there is no target text in the utterance of the user.

In another example, the computing apparatus may use the language model to detect an end token only in an utterance of the user. Based on the one end token only, the computing apparatus may determine that there is no target text in the utterance of the user.

In another example, the computing apparatus may use the language model to detect only a plurality of start tokens in an utterance of the user. When only the start token is detected in the utterance of the user, the computing apparatus may determine that there is no target text in the utterance of the user. Similarly, even when only a plurality of end tokens are detected in the utterance of the user, the computing apparatus may determine that there is no target text in the utterance of the user.

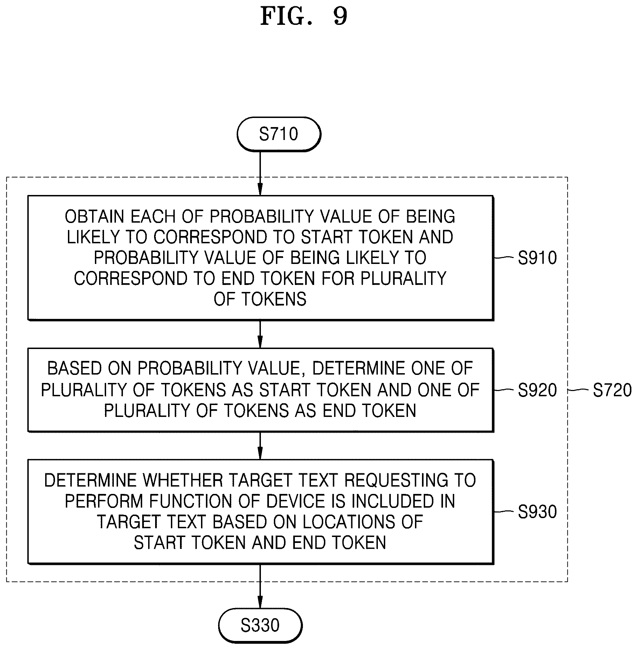

FIG. 9 is a flowchart for describing a detailed method of extracting a target text, according to an embodiment of the present disclosure. For reference, operation S720 of FIG. 7 will be described in more detail in connection with FIG. 9.

For convenience of explanation, overlapping descriptions with FIG. 7 will be described briefly or not repeated.

Referring to FIG. 9, operation S720 of FIG. 7 may include operations S910, S920 and S930. According to operations S910 to S930, the computing apparatus may use a language model to determine whether a target text is included in a conversation.

In operation S910, for each of a plurality of tokens, the computing apparatus may obtain a probability value of being likely to correspond to the start token and a probability value of being likely to correspond to the end token.

In an embodiment, the plurality of tokens may include a first token, a second token and a third token. The first to third tokens are defined for convenience of explanation.

The computing apparatus may obtain probability value 1_1 of being likely to correspond to the start token for the first token. The computing apparatus may obtain probability value 1_2 of being likely to correspond to the end token for the first token. For the first token, the computing apparatus may obtain each of a probability value of being likely to correspond to the start token and a probability value corresponding to the end token.

Similarly, the computing apparatus may obtain each of a probability value of being likely to correspond to the start token and a probability value corresponding to the end token for the second token. The computing apparatus may obtain each of a probability value of being likely to correspond to the start token and a probability value of being likely to correspond to the end token for the third token.

Although the description is focused on the first to third tokens for convenience of explanation, the computing apparatus may obtain each of a probability value of being likely to correspond to the start token and a probability value of being likely to correspond to the end token for each of a plurality of tokens obtained by tokenizing a conversation.

In operation S920, the computing apparatus may determine one of the plurality of tokens as the start token based on the probability value. The computing apparatus may determine one of the plurality of tokens as the end token based on the probability value.

In an embodiment, the computing apparatus may determine the highest of probability values of being likely to correspond to the start token for the plurality of tokens. The computing apparatus may determine a token corresponding to the highest probability value as the start token.

Similarly, the computing apparatus may determine the highest of probability values of being likely to correspond to the end token for the plurality of tokens. The computing apparatus may determine that a token corresponding to the highest probability value corresponds to the end token.

In an embodiment, the computing apparatus may extract a probability value that exceeds a threshold from among the probability values of being likely to correspond to the start token for the plurality of tokens. The computing apparatus may determine that a token corresponding to the probability value exceeding the threshold corresponds to the start token.

Similarly, the computing apparatus may extract a probability value exceeding the threshold from among probability values of being likely to the end token for the plurality of tokens. The computing apparatus may determine that a token corresponding to the probability value exceeding the threshold corresponds to the end token.

In operation S930, the computing apparatus may determine whether a target text requesting a device to perform a function is included, based on the start token and the end token.

In an embodiment, the computing apparatus may obtain location information of the start token and the end token in response to the determining of the start token and the end token. The computing apparatus may determine a target text according to locations of the start token and the end token.

In an embodiment, the computing apparatus may determine text from the location of the start token to the location of the end token as the target text.

In an embodiment, the computing apparatus may determine the start token and the end token in the utterance of the user among the plurality of tokens in the utterance of the user. The computing apparatus may determine the text from the location of the start token to the location of the end token as the target text when the start token and the end token are arranged in order.

In an embodiment, the computing apparatus may determine that no target text is included in the utterance of the user when the start token and the end token are located in reverse order. The computing apparatus may determine text before the end token, text from the end token to the start token, and text after the start token as non-target text.

In an embodiment, the computing apparatus may determine a token as the start token and the end token. In the case that the one token is determined as the start token and the end token, the computing apparatus may determine that no target text is included in the utterance of the user. The computing apparatus may determine text before the start token (or the end token) and text after the start token (or end token) as non-target text.

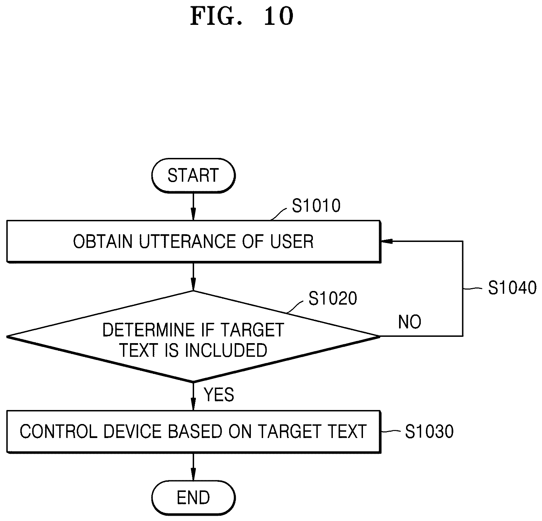

FIG. 10 is a flowchart illustrating a method of controlling a device based on a target text extracted from an utterance of a user, according to an embodiment of the present disclosure.

For convenience of explanation, description is focused on different ones from what is described in connection with FIG. 3. Operation S1010 corresponds to operation S310 of FIG. 3, so the description thereof will not be repeated. Operation S1020 corresponds to operation S320 of FIG. 3, so the description thereof will not be repeated. Operation S1030 corresponds to operation S330 of FIG. 3, so the description thereof will not be repeated. Hence, in FIG. 10, description is focused on operation S1040 that is different from what is described in connection with FIG. 3.

Referring to FIG. 10, in operation S1030, the computing apparatus may use a language model to determine whether a target text requesting a device to perform a function is included in an utterance of the user. In operation S1040, the computing apparatus may repeat obtaining an utterance of the user when determining that no target text is included.

In an embodiment, the computing apparatus may obtain another utterance of the user, when determining that no target text is included in the utterance of the user. For example, the computing apparatus may obtain a second utterance that occurs from the user after a first utterance, when determining that no target text is included in the first utterance.

The computing apparatus may determine whether a target text is included in the second utterance, extract a target text and control a device based on the extracted target text.

It is obvious that the computing apparatus may determine that no target text is included in the second utterance. In this case, the computing apparatus may obtain a third utterance occurring from the user after the second utterance in operation S1040, and repeatedly perform operations S1020 and S1030. The computing apparatus may repeat obtaining utterances of the user until determining that a target text is included in the utterance of the user.

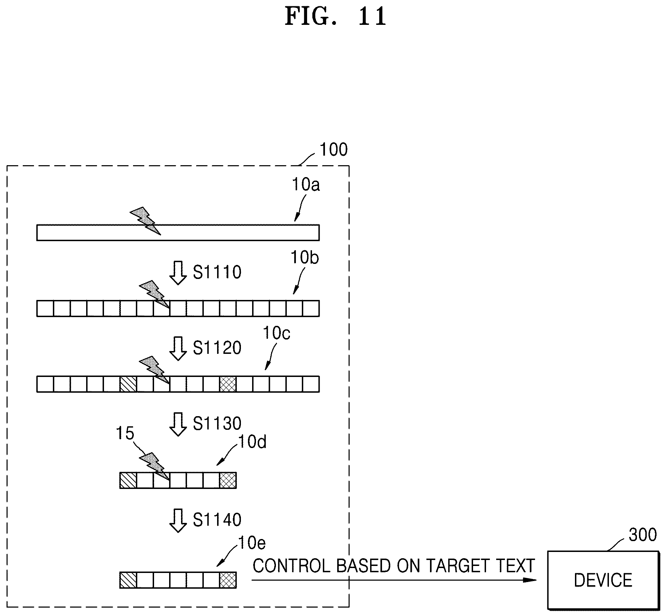

FIG. 11 is a conceptual diagram for describing an operation of canceling noise from a target text, according to an embodiment of the present disclosure.

For convenience of explanation, overlapping descriptions with FIG. 6 will be described briefly or not repeated.

Referring to FIG. 11, the computing apparatus 100 may obtain a target text by preprocessing the utterance 10 of the user, and control a device based on the target text. For reference, the computing apparatus 100 may refer to a processor of the computing apparatus, and operations of the computing apparatus 100 may be performed by the processor of the computing apparatus.

Furthermore, an operation of the computing apparatus 100 may refer to an operation performed by the computing apparatus using a language model. Operations S1110 to 1130 of FIG. 11 may be performed by the language model, and the computing apparatus may obtain a result performed by the language model to control the device.

In an embodiment, the computing apparatus 100 may obtain the utterance 10a of the user. In operation S1110, the computing apparatus 100 may tokenize the obtained utterance 10a of the user. In an embodiment, the computing apparatus 100 may obtain a plurality of tokens by tokenizing the utterance 10a of the user.

In operation S1120, the computing apparatus may sort out the plurality of tokens. The computing apparatus may determine the start token 12c and the end token 13c of the plurality of tokens. In operation S1130, the computing apparatus may obtain the target text 10d based on the start token 12d and the end token 13d.

In an embodiment, the obtained target text 10d may include noise 15. The noise 15 may refer to one occurring during the occurrence of the utterance 10 of the user. The noise 15 may include noise such as another user's voice, the sound of wind, etc., that occurs regardless of the utterance 10 of the user and noise occurring during a process of transmitting and amplifying an audio signal, but the disclosure is not limited thereto.

In operation S1140, the computing apparatus may cancel noise mixed in the target text 10d. The computing apparatus may cancel the noise included in the target text 10d.

In an embodiment, the computing apparatus may use the language model to distinguish the noise 15 unrelated to the target text 10d. The computing apparatus may cancel the distinguished noise 15. For example, the language model may distinguish the noise 15 unrelated to certain text from the certain text by learning patterns and structures of training data.

In an embodiment, the computing apparatus may cancel the noise through various noise canceling methods using blurring, low-pass filtering, moving averaging, etc., and the disclosure is not limited to the noise canceling methods.

In an embodiment, the computing apparatus 100 may control a device based on target text 10e from which the noise 15 is canceled.

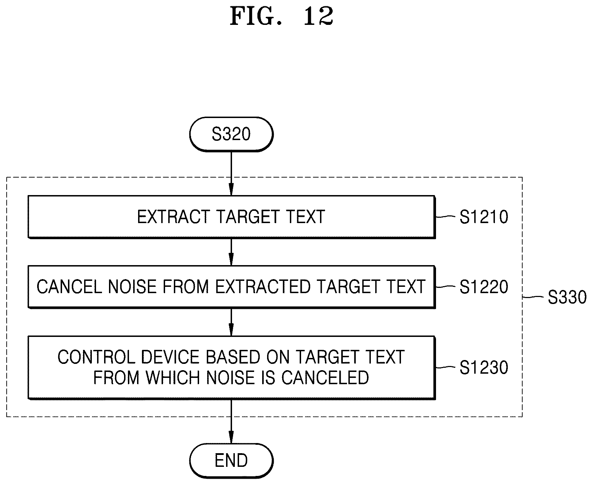

FIG. 12 is a flowchart illustrating a method of canceling noise from a target text, according to an embodiment of the present disclosure.

For convenience of explanation, overlapping descriptions with FIG. 3 will be described briefly or not repeated.

Referring to FIG. 12, operation S330 of FIG. 3 may include operations S1210, S1220 and S1230.

In operation S1210, the computing apparatus may extract a target text when determining that the target text is included in an utterance of the user.

In an embodiment, the computing apparatus may sort out at least one target text and at least one non-target text from the utterance of the user by analyzing the utterance of the user with the language model. The non-target text may refer to other text than the target text related to a command to request the device to perform a function.

In an embodiment, the computing apparatus may extract the target text from the sorted target text and non-target text, when determining that the target text is included in the utterance of the user.

In operation S1220, the computing apparatus may cancel noise from the extracted target text.

In an embodiment, the extracted target text may include noise. For example, the target text may be a text sequence having a context, and the target text may include text noise out of the context of the target text. In another example, the target text may be a voice sequence having a certain frequency range, and the target text may include voice noise out of the frequency range of the target text.

In an embodiment, the computing apparatus may use the language model to cancel the noise from the target text. The computing apparatus may distinguish the noise unrelated to the certain text from the certain text and cancel the noise by learning patterns and structures of training data.

In operation S1230, the computing apparatus may control a device based on the target text from which the noise is canceled. The computing apparatus may control the device at the request for the device to perform a function intended by the target text.

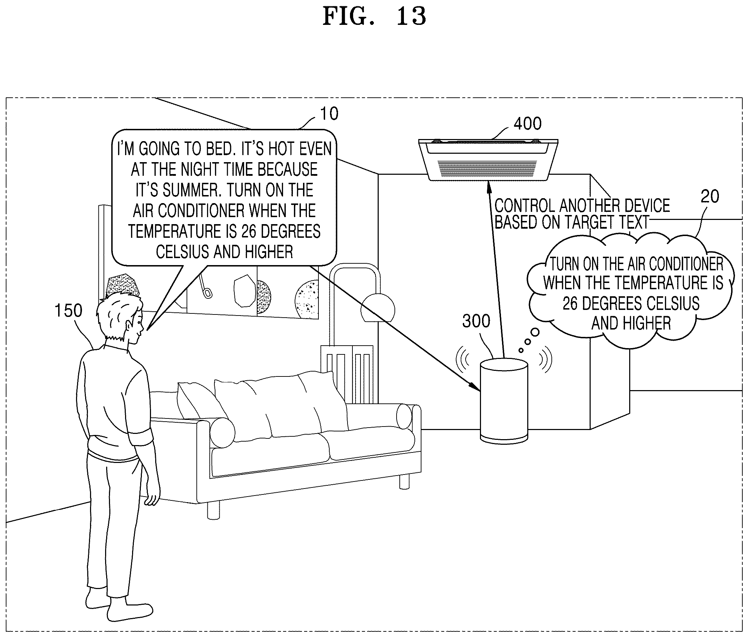

FIG. 13 is a diagram for describing a method of controlling another device based on a target text extracted from an utterance of a user, according to an embodiment of the present disclosure.

For convenience of explanation, overlapping descriptions with FIG. 1 will be described briefly or not repeated.

Referring to FIG. 13, the computing apparatus may control the device based on a target text 20 extracted from the utterance 10 of the user. The device may include the first device 300 and a second device 400.

In an embodiment, the first device 300 is shown as any device, and the present disclosure is not limited to the type of the first device 300. For example, the first device 300 may include an electronic device such as a mobile phone, an audio system, a television, a computer, or the like.

In an embodiment, the second device 400 is shown as an air conditioner for example, but the present disclosure is not limited to the type of the second device 400. For example, the second device 400 may include an electronic device such as a mobile phone, an audio system, a television, a computer, or the like.

In an embodiment, the computing apparatus may obtain the utterance 10 that occurs from the user 150. The computing apparatus may determine whether the utterance 10 of the user includes the target text 20. The computing apparatus may extract the target text 20 when the target text 20 is included in the utterance 10 of the user. The computing apparatus may control the first device 300 based on the target text 20.

In an embodiment, the target text 20 may be one to request the second device 400 to perform a function. The computing apparatus may generate a request the second device 400 to perform a function based on the target text 20. The computing apparatus may control the first device 300 to send the generated request to the second device 400.

In an embodiment, the first device 300 may be a computing apparatus. The first device 300 may obtain the utterance of the user 150. The first device 300 may determine whether the utterance 10 of the user includes the target text 20. The first device 300 may extract the target text 20 when the target text 20 is included in the utterance 10 of the user. The first device 300 may control the second device 400 based on the target text 20.

For example, the user 150 may utter as follows: "I'm going to bed. It's hot even at the night time because it's summer. Turn on the air conditioner when the temperature is 26 degrees Celsius or higher". The utterance 10 may include the target text 20 and non-target text.

The text data "Turn on the air conditioner when the temperature is 26 degrees Celsius or higher" to the second device 400, the air conditioner may be the target text 20 requesting the second device 400 to perform a function. The text data "I'm going to bed. It's hot even at the night time because it's summer" may be the non-target text for the second device 400.

In an embodiment, the computing apparatus may control the first device 300 to send the request for the second device 400 to perform a function based on the target text 20 "Turn on the air conditioner when the temperature is 26 degrees Celsius or higher".

FIG. 14 is a diagram for describing a method of controlling a device based on a target text extracted from utterances of a plurality of users, according to an embodiment of the present disclosure.

For convenience of explanation, overlapping descriptions with FIGS. 1 and 13 will be described briefly or not repeated.

Referring to FIG. 14, the computing apparatus may obtain utterances between multiple users 151 and 152. The computing apparatus may control a device based on the target text 20 extracted from the utterances between the multiple users 151 and 152. Although the device is shown in FIG. 14 as including the first device 300 and the second device 400, the disclosure is not limited thereto, and it is obvious that a single device may be included as shown in FIG. 1.

For convenience of explanation, the utterances between the multiple users 151 and 152 include the first utterance 11, the second utterance 12 and the third utterance 13. The first utterance 12 may be an utterance of the first user 151. The second utterance 12 may be an utterance of the second user 152. The third utterance 13 may be an utterance of the second user 152. It is obvious that each utterance may occur from any user, and the utterance entity is specified herein just for detailed description.

In an embodiment, the computing apparatus may obtain utterances that occur from the multiple users 151 and 152. The computing apparatus may determine whether the utterances between the multiple users 151 and 152 include the target text 20. The computing apparatus may determine whether each of the first utterance 11, the second utterance 12 and the third utterance 13 includes the target text 20.

For example, the computing apparatus may obtain the first utterance 11. The computing apparatus may determine that the target text 20 is not included in the first utterance 11. In another example, the computing apparatus may obtain the second utterance 12. The computing apparatus may determine that the target text 20 is not included in the second utterance 12. In another example, the computing apparatus may obtain the third utterance 13. The computing apparatus may determine that the target text 20 is included in the third utterance 13.

In an embodiment, the computing apparatus may extract the target text 20 when the target text 20 is included in the utterances between the multiple users 151 and 152. The computing apparatus may determine that the target text 20 is included in the utterances between the multiple users 151 and 152. Specifically, the computing apparatus may determine that the target text 20 is included in the third utterance 13 and extract the target text 20 from the third utterance 13. The computing apparatus may control the first device 300 based on the target text 20.

In an embodiment, the target text 20 may be one to request the second device 400 to perform a function. The computing apparatus may generate a request the second device 400 to perform a function based on the target text 20. The computing apparatus may control the first device 300 to send the generated request to the second device 400.

In an embodiment, the first device 300 may be a computing apparatus. The first device 300 may obtain utterances that occur from the multiple users 151 and 152. The first device 300 may determine whether the utterances between the multiple users 151 and 152 include the target text 20. The first device 300 may extract the target text 20 when the target text 20 is included in the utterances between the multiple users 151 and 152. The first device 300 may control the second device 400 based on the target text 20.

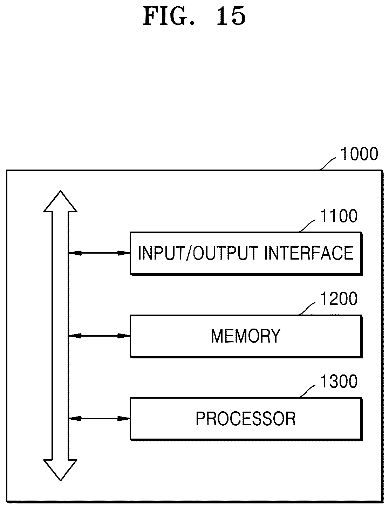

FIG. 15 is a diagram for describing a configuration of a computing apparatus for controlling a device based on a target text extracted from an utterance of a user, according to an embodiment of the present disclosure.

Referring to FIG. 15, a computing apparatus 1000 according to an embodiment may include an input/output interface 1100, a memory 1200 and a processor 1300. Components of the computing apparatus 1000 are not, however, limited to the example, and the computing apparatus 1000 may include fewer or more components than the aforementioned components. In an embodiment, some or all of the input/output interface 1100, the memory 1200 and the processor 130 may be implemented in the form of a single chip, and the processor 1300 may include one or more processors.

The input/output interface 1100 may include an input interface (e.g., a touch screen, a hard button, a microphone, etc.) for receiving a control command or information from the user, and an output interface (e.g., a display panel, a speaker, etc.) for displaying an execution result of an operation under the control of the user or status of the computing apparatus 1000.

The memory 1200 is a component for storing various programs or data, and may be configured with a storage medium such as a ROM, a RAM, a hard disk, a CD-ROM, and a DVD, or a combination of storage mediums. The memory 1200 may not be separately present but integrated into the processor 1300. The memory 1200 may include a volatile memory, a non-volatile memory, or a combination of the volatile memory and the non-volatile memory. The memory 1200 may store a program or instructions for performing operations according to the aforementioned embodiments described with reference to FIGS. 1 to 14. The memory 1200 may also provide the stored data to the processor 1300 at the request of the processor 1300.

The processor 1300 may be configured with one or more processors to control a series of processes for operating the computing apparatus 1000 according to the aforementioned embodiments described with reference to FIGS. 1 to 14. The one or more processors may include a universal processor such as a central processing unit (CPU), an application processor (AP), a digital signal processor (DSP), etc., a graphic processing unit (GPU), a vision processing unit (VPU), etc., or a dedicated artificial intelligence (AI) processor such as a neural processing unit (NPU). For example, when the one or more processors are the dedicated AI processors, the dedicated AI processors may be designed in a hardware structure that is specific to dealing with a particular AI model.

The processor 1300 may record data in the memory 1200 or read out data stored in the memory 1200, and especially, execute the program or the instruction stored in the memory 1200 to process data according to a predefined operation rule or an AI model. The processor 1300 may perform the operations described in the aforementioned embodiments, and the operations described as being performed by the computing apparatus 1000 in the aforementioned embodiments may be regarded as being performed by the processor 1300 unless stated otherwise.

According to an embodiment, a method may include obtaining an utterance of a user. The method may include determining whether a target text requesting a device to perform a function is included in the utterance by using a language model. The method may include controlling the device based on the target text when determining that the target text is included. The language model may be a model trained to extract text related to a request from successive sentences.

In an embodiment, the utterance may be a voice input by the user. The method may further include converting the utterance to text.

In an embodiment, the obtaining of the utterance may include obtaining a wake-up word. The obtaining of the utterance may include obtaining an utterance after the wake-up word is obtained.

In an embodiment, the determining of whether the target text is included may include dividing the utterance into a plurality of tokens by tokenizing the utterance. The determining of whether the target text is included may include determining whether the target text is included in the utterance based on the plurality of tokens.

In an embodiment, the plurality of tokens may include a start token corresponding to a beginning of text related to the request, and an end token corresponding to an end of the text related to the request. The determining of whether the target text is included in the utterance based on the plurality of tokens may include obtaining, for the plurality of tokens, a probability value of being likely to correspond to the start token and a probability value of being likely to correspond to the end token. The determining of whether the target text is included in the utterance based on the plurality of tokens may include determining one of the plurality of tokens as the start token and determining one of the plurality of tokens as the end token, based on the probability values. The determining of whether the target text is included in the utterance based on the plurality of tokens may include determining whether a target text requesting a device to perform a function is included based on locations of the start token and end token.

In an embodiment, the determining of whether the target text is included based on the locations of the start token and end token may include determining text in a range from the start token to the end token as the target text when the start token and the end token are arranged in order in the utterance.

In an embodiment, the determining of whether the target text is included based on the locations of the start token and end token may include determining text in a range from the end token to the start token as a non-target text when the start token and the end token are arranged in reverse order in the utterance.

In an embodiment, the method may include re-performing the obtaining of an utterance to obtain another utterance when determining that the target text is not included in the utterance.

In an embodiment, the controlling of the device based on the target text may include extracting the target text. The controlling of the device based on the target text may include canceling noise from the extracted target text. The controlling of the device based on the target text may include controlling the device based on the target text from which the noise is canceled.

In an embodiment, the target text may be text requesting a second device to perform a function. The controlling of the device based on the target text may include generating a request the second device to perform the function based on the target text. The controlling of the device based on the target text may include controlling a first device to send the second device the request the second device to perform the function based on the target text.

According to an embodiment of the present disclosure, a transient computer-readable recording medium having a program recorded thereon to cause a computer to perform a method according to an embodiment of the present disclosure may be provided.

According to an embodiment, a computing apparatus may include an input/output interface, a memory, and at least one processor. The input/output interface may receive a user input. The memory may store instructions for processing a language. The at least one processor may execute the instructions to obtain an utterance of a user. The at least one processor may determine whether a target text requesting a device to perform a function is included in the utterance by using a language model. The at least one processor may control the device based on the target text when determining that the target text is included. The language model may be a model trained to extract text related to a request from successive sentences.

In an embodiment, the utterance may be a voice input by the user. The at least one processor may convert the utterance to text.

In an embodiment, the at least one processor may obtain a wake-up word in obtaining the utterance. The at least one processor may obtain an utterance after the wake-up word is obtained in obtaining the utterance.

In an embodiment, the t least one processor may divide the utterance into a plurality of tokens by tokenizing the utterance in determining whether the target text is included. The at least one processor may determine whether the target text is included in the utterance based on the plurality of tokens in determining whether the target text is included.

In an embodiment, the plurality of tokens may include a start token corresponding to a beginning of text related to the request, and an end token corresponding to an end of the text related to the request. The at least one processor may obtain, for the plurality of tokens, a probability value of being likely to correspond to the start token and a probability value of being likely to correspond to the end token in determining whether the target text is included in the utterance based on the plurality of tokens. The at least one processor may determine one of the plurality of tokens as the start token and determining one of the plurality of tokens as the end token, based on the probability values, in determining whether the target text is included in the utterance based on the plurality of tokens. The at least one processor may determine whether a target text requesting a device to perform a function is included based on locations of the start token and end token in determining whether the target text is included in the utterance based on the plurality of tokens.

In an embodiment, the at least one processor may determine text in a range from the start token to the end token as the target text when the start token and the end token are arranged in order in the utterance, in determining whether the target text is included based on the locations of the start token and end token.

In an embodiment, the at least one processor may determine text in a range from the end token to the start token as a non-target text when the start token and the end token are arranged in reverse order in the utterance, in determining whether the target text is included based on the locations of the start token and end token.

In an embodiment, the at least one processor may re-perform the obtaining of an utterance to obtain another utterance when determining that the target text is not included in the utterance.

In an embodiment, the at least one processor may extract the target text, in controlling the device based on the target text. The at least one processor may cancel noise from the extracted target text in controlling the device based on the target text. The at least one processor may control the device based on the target text from which the noise is canceled, in controlling the device based on the target text.

Various embodiments of the disclosure may be implemented or supported by one or more computer programs, which are formed of computer-readable program codes and may be embodied on a computer-readable medium. Throughout the specification, the terms 'application' and 'program' may refer to one or more computer programs, software components, instruction sets, procedures, functions, objects, classes, instances, associated data, or part thereof, suitably implemented in computer-readable program codes. The computer-readable program codes may include various types of computer codes including source codes, target codes and executable codes. The computer-readable medium may include various types of medium accessible by a computer, such as a ROM, RAM, a hard disk drive (HDD), a compact disc (CD), a digital video disc (DVD) or other various types of memory.

The computer-readable storage medium may be provided in the form of a non-transitory storage medium. The non-transitory storage medium is a tangible device, which may exclude wired, wireless, optical, or other communication links to transmit the transitory electric or other signals. The non-transitory storage medium does not discriminate between an occasion when data is semi-permanently stored and an occasion when data is temporarily stored in the storage medium. For example, the non-transitory storage medium may include a buffer that temporarily stores data. The computer-readable medium may be an arbitrary available medium that may be accessed by the computer, including volatile, non-volatile, removable, and non-removable mediums. The computer-readable medium includes a medium for storing data permanently, and a medium for storing data which can be overwritten afterward, i.e., a rewritable optical disk or an erasable memory device.

In an embodiment of the disclosure, the aforementioned method according to the various embodiments of the disclosure may be provided in a computer program product. The computer program product may be a commercial product that may be traded between a seller and a buyer. The computer program product may be distributed in the form of a storage medium (e.g., a compact disc read only memory (CD-ROM)), through an application store, directly between two user devices (e.g., smart phones), or online (e.g., downloaded or uploaded). In the case of online distribution, at least part of the computer program product (e.g., a downloadable app) may be at least temporarily stored or arbitrarily created in a storage medium that may be readable to a device such as a server of the manufacturer, a server of the application store, or a relay server.

Several embodiments have been described, but a person of ordinary skill in the art will understand and appreciate that various modifications can be made without departing the scope of the present disclosure. For example, the aforementioned method may be performed in a different order, and/or the aforementioned systems, structures, devices, circuits, etc., may be combined in different combinations from what is described above, or replaced or substituted by other components or equivalents thereof, to obtain appropriate results. Thus, it will be apparent to those of ordinary skill in the art that the present disclosure is not limited to the embodiments described, but can encompass not only the appended claims but the equivalents. For example, an element described in the singular form may be implemented as being distributed, and elements described in a distributed form may be implemented as being combined.

The scope of the present disclosure is defined by the appended claims, and it will be understood by those of ordinary skill in the art that various changes in form and details may be made without departing from the spirit and scope of the present disclosure as defined by the appended claims and their equivalents.

## Claims

1. A method comprising:
obtaining an utterance (10) of a user;
determining whether a target text (20) requesting a device (300) to perform a function is included in the utterance by using a language model (200); and
controlling the device (300) based on the target text based on determining that the target text is included,
wherein the language model is a model trained to extract text related to a request from successive sentences.

2. The method of claim 1, wherein the utterance is a voice input by the user, the method further comprising:
converting the utterance to text.

3. The method of any one of claims 1 and 2, wherein the obtaining of the utterance comprises
obtaining a wake-up word; and
obtaining the utterance after the wake-up word is obtained.

4. The method of any one of claims 1 to 3, wherein the determining of
whether the target text is included comprises
dividing the utterance into a plurality of tokens by tokenization of the utterance; and
determining whether the target text is included in the utterance based on the plurality of tokens.

5. The method of claim 4, wherein the plurality of tokens comprise a start token corresponding to a beginning of the text related to the request and an end token corresponding to an end of the text related to the request, and
the determining of whether the target text is included in the utterance based on the plurality of tokens comprises
for the plurality of tokens, obtaining probability values of being likely to correspond to the start token and probability values of being likely to correspond to the end token;
based on the probability values, determining one of the plurality of tokens as the start token and determining one of the plurality of tokens as the end token; and
determining, based on locations of the start token and the end token, whether the target text requesting the device to perform the function is included.

6. The method of claim 5, wherein the determining of whether the target text is included based on the locations of the start token and the end token comprises determining text in a range from the start token to the end token as the target text when the start token and the end token are arranged in order in the utterance.

7. The method of any one of claims 5 and 6, wherein the determining of whether the target text is included based on the locations of the start token and the end token comprises determining text in a range from the end token to the start token as a non-target text when the start token and the end token are arranged in reverse order in the utterance.

8. The method of any one of claims 1 to 7, further comprising re-performing the obtaining of utterance to obtain another utterance when determining that the target text is not included in the utterance.

9. The method of any one of claims 1 to 8, wherein:
the target text is text requesting a second device to perform a function, and
the controlling of the device based on the target text comprises generating a request the second device to perform the function based on the target text; and
controlling a first device to send the second device the request the second device to perform the function.

10. A non-transitory computer-readable recording medium having a program recorded thereon to cause a computer to perform the method of any one of claims 1 to 9.

11. A computing apparatus comprising:
an input/output interface configured to receive a user input;
memory storing instructions for processing a language; and
at least one processor,
wherein the at least one processor is configured to execute the instructions to
obtain an utterance of a user,
determine whether the utterance includes a target text requesting a device to perform a function by using a language model, and
control the device based on the target text based on determining that the target text is included,
wherein the language model is a model trained to extract text related to a request from successive sentences.

12. The computing apparatus of claim 11, wherein the at least one processor is configured to, in determining whether the target text is included,
divide the utterance into a plurality of tokens by tokenization of the utterance, and
determine whether the target text is included in the utterance based on the plurality of tokens.

13. The computing apparatus of claim 12, wherein the plurality of tokens comprise a start token corresponding to a beginning of the text related to the request and an end token corresponding to an end of the text related to the request, and
the at least one processor is configured to, in determining whether the target text is included in the utterance based on the plurality of tokens,
for the plurality of tokens, obtain probability values of being likely to correspond to the start token and probability values of being likely to correspond to the end token,
based on the probability values, determine one of the plurality of tokens as the start token and determine one of the plurality of tokens as the end token, and
determine whether the target text requesting the device to perform the function is included, based on locations of the start token and the end token.

14. The computing apparatus of claim 13, wherein the at least one processor
is configured to, in determining whether the target text is included based on the locations of the start token and the end token,
determine text in a range from the start token to the end token as the target text when the start token and the end token are arranged in order in the utterance.

15. The computing apparatus of any one of claims 13 and 14, wherein the at least one processor is configured to, in determining whether the target text is included based on the locations of the start token and the end token, determine text in a range from the end token to the start token as a non-target text when the start token and the end token are arranged in reverse order in the utterance.
